# EUROPEAN PATENT SPECIFICATION

(11) **EP 3 081 452 B1**
(45) Date of publication and mention of the grant of the patent: **27.01.2021**
(21) Application number: 14869883.0
(22) Date of filing: 10.12.2014
(51) Int. Cl.: B62B 3/00, B60B 33/08, B62B 5/00, B60B 19/14, B62D 9/00

(54) **SELF-PROPELLED CARRIAGE USING SPHERICAL DRIVE MODULE**
SELBSTANGETRIEBENER WAGEN MIT VERWENDUNG VON SPHÄRISCHEM ANTRIEBSMODUL
CHARIOT AUTOMOTEUR SE SERVANT D'UN MODULE D'ENTRAÎNEMENT À ROTULE

(30) Priority: 11.12.2013 JP 2013256435
(43) Date of publication of application: 19.10.2016
(73) Proprietor: Reif Co., Ltd., Kitakyushu-shi, Fukuoka 802-0065 (JP)
(72) Inventor: MORI Masao, Kitakyushu-shi Fukuoka 802-0065 (JP); TSUKASATO Yoshimi, Kitakyushu-shi Fukuoka 802-0065 (JP); TANIMOTO Yoshitaro, Kitakyushu-shi Fukuoka 808-0122 (JP)
(74) Representative: Vossius & Partner Patentanwälte Rechtsanwälte mbB
(86) International application number: PCT/JP2014/082711
(87) International publication number: WO 2015/087922

(56) References cited:
- WO-A1-2012/164208
- JP-A- H1 023 613
- JP-A- H07 257 422
- JP-A- H07 257 422
- JP-A- 2001 097 221
- JP-A- 2001 354 155
- JP-A- 2001 354 155
- JP-A- 2004 344 435
- JP-A- 2009 108 542
- JP-A- 2010 008 204
- JP-U- H0 198 072
- JP-U- H0 198 072

## Description

### TECHNICAL FIELD

The present invention relates to self-propelled carriages for, for example, conveying beds and the like, and self-propelled carriages for use in assistive devices for walking, and relates especially to self-propelled carriages using spherical-body-driven modules on the bottom of the self-propelled carriages as traveling sources.

### BACKGROUND ART

On the bottom of self-propelled carriages for conveying beds and on the bottom of carriage frames of assistive devices for walking (see JP 2011 229838 A), for example, as illustrated in FIG. 12, a driving device 201 moving on a floor surface (traveling surface) 200 is provided. A drive mechanism 202 of this driving device 201 has a spherical body 203, driving rotors 204 in direct contact with the spherical body 203, arranged along an X-axis and a Y-axis orthogonal to each other at a center of the spherical body 203, and each driving rotationally, a seat 206 below the center of the spherical body 203 and above the floor surface 200, having the driving rotors 204 mounted, and provided with an opening 205 making a lower portion of the spherical body 203 project to make the lower portion of the spherical body be in direct contact with the floor surface 200, first supporting members 208 each having a nearly arc-like shape in a side view, each having a base side fixed to the seat 206, and each pressing a roller 207 rotatably attached to a tip side of the first supporting member 208 to parts each on a side opposite to parts where the driving rotors 204 are in direct contact with the spherical body 203, and a second supporting member 210 having a base side fixed to an area on the seat 206 that is outside of an equator of the spherical body 203 in planar view, tilted obliquely upward in a manner that makes a tip of the second supporting member 210 positioned above the spherical body 203, and pressing a ball 209 rotatably provided at a tip portion of the second supporting member 210 to a top of the spherical body 203 (see e.g., JP 2004 153968 A).

JP H07 257422 A discloses an omnidirectional drive wheel and an omnidirectional travelling vehicle. A ball-shaped wheel is supported at five points by transmitters for transmitting the respective torque of prime movers and supporting tools. The ball-shaped wheel can easily rotate by the use of a ball caster as supporting tools.

### SUMMARY OF INVENTION

### TECHNICAL PROBLEM

In the case of the driving device 201 in JP 2004 153968 A, due to the first supporting members 208 each being curved in a nearly arc-like shape, a contacted state between the spherical body 203 and one of the driving rotors 204 and between the spherical body 203 and the other one of the driving rotors 204 can be maintained by pressing the rollers 207 to the spherical body 203 by means of a suitable bias force. Also, due to the second supporting member 210 being attached to the seat 206 in a tilted state, the spherical body 203 can be pressed to the floor surface 200 by means of a suitable bias force by pressing the ball 209 to the spherical body 203 by means of a suitable bias force. Therefore, by rotating the spherical body 203, a conveyance carriage having the driving device 201 attached through the carriage frame can be moved to a rotation direction of the spherical body 203.

However, when a weight of an object to be conveyed that is laden on the conveyance carriage becomes heavy, the weight of the object to be conveyed becomes applied on the spherical body 203 through the carriage frame, making friction force between the spherical body 203 and the floor surface 200 large. Thus, if the friction force between the spherical body 203 and the floor surface 200 exceeds the friction force between the spherical body 203 and one of the driving rotors 204 and between the spherical body and the other one of the driving rotors 204 associated with the load of pressing the spherical body 203 to the driving rotors 204 by the first supporting means 208, the driving rotors 204 go into a slide with respect to the spherical body 203, becoming incapable of transmitting rotary drive force to the spherical body 203, which leads to a problem in that the conveyance carriage cannot be moved.

Additionally, in the case of the assistive device for walking described in JP 2011 229838 A, there is proposed a device having uncontrolled wheels (casters) provided around a carriage frame. In the case of this device, the uncontrolled wheels are structured so as not to be in constant contact with a floor surface. However, in view of stable traveling, it is preferred that an overall load be dispersed on the uncontrolled wheels and the spherical body by making a height of the uncontrolled wheels small and setting the small uncontrolled wheels on the floor surface. In this case, there is a problem in that there is a difficulty in height adjustment between the uncontrolled wheels and the spherical body.

The present invention has been made in view of the above circumstances, and an object thereof is to provide a self-propelled carriage that uses spherical-body-driven modules to be attached to a base of a carriage frame having uncontrolled wheels on a circumference, that are capable of infallibly transmitting rotary drive force to spherical bodies regardless of changes in load applied on the carriage frame, and that are capable of moving the carriage frame.

### SOLUTION TO PROBLEM

A self-propelled carriage as recited in the independent claim is provided. The dependent claims define embodiments.

In order to achieve the above object, according to a first aspect, there is provided a self-propelled carriage having spherical-body-driven modules attached to a base of a carriage frame, each of the spherical-body-driven modules provided with a spherical body in direct contact with a floor surface from above, a first drive wheel and a second drive wheel contacting a vertically middle position of the spherical body respectively from an X-axis direction and a Y-axis direction within a level surface, and rotationally driven respectively by a first rotary drive source and a second rotary drive source, a first uncontrolled-ball bearing mechanism and a second uncontrolled-ball bearing mechanism respectively on a side opposite to the first drive wheel and on a side opposite to the second drive wheel and respectively receiving reaction force from the first drive wheel and reaction force from the second drive wheel, a third uncontrolled-ball bearing mechanism at a position above the spherical body and holding the spherical body by receiving a load applied on the spherical body, and a base at a position above the spherical body and supporting the first and the second drive wheels and the first to the third uncontrolled-ball bearing mechanisms, and each of the spherical-body-driven modules is provided to the carriage frame through a plurality of suspension mechanisms for each which an elastic material is used, and additionally, uncontrolled wheels in direct contact with the floor surface are provided on a circumference of the carriage frame.

Here, the self-propelled carriage refers to a carrier device for beds and such, an assistive device for walking and the like.

According to a second aspect, in the self-propelled carriage of the first aspect, a force sensor detecting force component in an X-axis direction and a Y-axis direction orthogonal to each other within a level surface and a quantity of moment around a Z-axis orthogonal to the level surface is provided to part of the carriage frame, and the spherical-body-driven modules move to a direction of a load applied on the carriage frame.

Here, the part of the carriage frame refers to a part where an operation load (a deformation load) is directly applied on a member due to an operation load from the outside, and specifically refers to an operation handle (a grip), and an engagement mechanism, a lifting mechanism and the like on which an object to be conveyed becomes put.

According to a third aspect , in the self-propelled carriage of the first aspect, a tower is formed projecting on the carriage frame, the tower is provided with a grip, a force sensor detecting force component in an X-axis direction and a Y-axis direction orthogonal to each other within a planar surface, force component in a Z-axis direction orthogonal to these X-axis and Y-axis directions, and a quantity of moment around the Z-axis is provided to the tower or the grip, and the spherical-body-driven modules move along a direction of a load detected by the force sensor.

According to a fourth aspect, in the self-propelled carriage of the third, the force sensor is further provided with a sensor detecting a load in the Z-axis direction, and by detecting a load that is equal to or more than a predetermined load in the Z-axis direction, the spherical body stop.

According to a fifth aspect, in the self-propelled carriages of the first to the fourth aspects , the spherical body 1) has a multilayer structure having a spherical core material consisting of hard plastic or metal, and an outer shell formed around the core material and consisting of rubber or non-rigid plastic, or 2) consists of hard plastic, non-rigid plastic, rubber, or metal, each of which having a uniform structure.

In the self-propelled carriages of the first to the fifth aspects, the third uncontrolled-ball bearing mechanism may be at a position above an equator of the spherical body, and may have a first uncontrolled-ball supporting body and a second uncontrolled-ball supporting body simultaneously and respectively receiving reaction force from the first drive wheel and reaction force from the second drive wheel, and a third uncontrolled-ball supporting body eccentrically provided above the spherical body and pressing the spherical body to the first and the second drive wheels by receiving a load applied on the spherical body.

According to the present invention, in the self-propelled carriages of the first to the fifth aspects , the third uncontrolled-ball bearing mechanism has a first uncontrolled-ball supporting body positioned on a top of the spherical body and second uncontrolled-ball supporting bodies arranged in plurality and surrounding the first uncontrolled-ball supporting body. The first uncontrolled-ball bearing mechanism and the second uncontrolled-ball bearing mechanism respectively have a third uncontrolled-ball supporting body and a fourth uncontrolled-ball supporting body, the third uncontrolled-ball supporting body arranged above the fourth uncontrolled-ball supporting body with the equator of the spherical body in between and respectively receiving pressing force of the first drive wheel and pressing force of the second drive wheel.

According to an eighth aspect, in the self-propelled carriages of the first to the fifth aspects, a cleaning mechanism in contact with the spherical body from a lateral direction and removing refuse adhered to the spherical body is provided.

According to a ninth aspect , in the self-propelled carriages of the first to the eighth aspects of the present invention, a cover preventing dropping of the spherical body is provided to the base through supporting members.

### ADVANTAGEOUS EFFECTS OF INVENTION

In the case of the self-propelled carriages according to the first to the ninth aspects, since the spherical-body-driven modules are provided to the carriage frame through the suspension mechanisms for each of which an elastic member is used, and the uncontrolled wheels in direct contact with the floor surface are provided on the circumference of the carriage frame, a load applied on the carriage frame can be dispersed on the spherical-body-driven modules and the uncontrolled wheels. In this case, loads of the spherical-body-driven modules pressing the floor surface can be adjusted by the suspension mechanisms each having the elastic member, which enables the spherical bodies to be driven to travel with provision of sufficient pressing force.

Also, even on an uneven floor surface, the rotating spherical bodies can infallibly be made to be in contact with the uneven floor surface, ensuring stable traveling of the self-propelled carriages.

Especially, in the case of the self-propelled carriage according to the second aspect, since the force sensor is provided to part of the carriage frame, assisting operations for moving performed at any position of the carriage frame can move the self-propelled carriage in a direction of assisted movement (in a direction of a load).

Additionally, in the case of the self-propelled carriage according to the third aspect, since the tower provided with a grip (a handle) is formed projecting on the carriage frame, and since the tower or the grip is provided with the force sensor detecting the force component in the X-axis direction and the Y-axis direction orthogonal within the planar surface, the force component in the Z-axis direction orthogonal to these X-axis and Y-axis directions, and the quantity of moment around the Z-axis, when the grip is laterally pressed, the spherical-body-driven modules move along the direction of a load detected by the force sensor.

In the case of the self-propelled carriage according to the fourth aspect, since the force sensor is further provided with a sensor detecting a load in the Z-axis direction, by detecting a load equal to or more than a predetermined load in the Z-axis direction, for example, by pushing down the grip, the spherical bodies stop, and the self-propelled carriage stops.

In the case of the self-propelled carriage according to the eighth aspect, since the cleaning mechanisms each in contact with one of the spherical bodies from a lateral direction and removing refuse adhered to the one of the spherical bodies are provided, the spherical bodies can constantly be kept in a clean state.

### BRIEF DESCRIPTION OF DRAWINGS

FIG. 1 is a partially omitted explanatory diagram of a self-propelled carriage in a state of having spherical-body-driven modules attached to a carriage frame through suspension mechanisms.
FIG. 2(A) is a cross-sectional view in a direction of P to P in FIG. 1; and 2(B) is a plan view of a cleaning mechanism.
FIG. 3 is a plan view showing a positional relationship among a spherical body and a first to fifth uncontrolled-ball supporting body.
FIG. 4 is a bottom view of the same self-propelled carriage.
FIG. 5 is a plan view of the same self-propelled carriage.
FIG. 6 is a partially omitted elevation view of the same self-propelled carriage.
FIG. 7 is a partially omitted side view showing a connected state of the same self-propelled carriage and a bed.
FIG. 8 is an explanatory diagram of a spherical-body-driven module for use in a self-propelled carriage.
FIG. 9 is an explanatory diagram of the same spherical-body-driven module.
FIG. 10 is a partially omitted cross-sectional view of a self-propelled carriage.
FIG. 11 is an explanatory diagram of an electrical system of the self-propelled carriages .

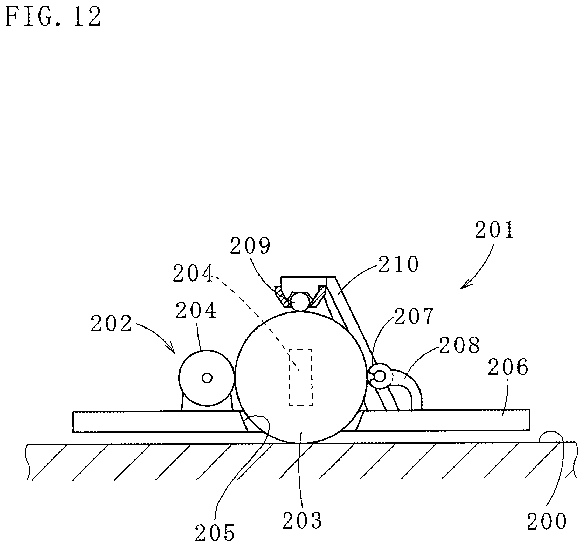

FIG. 12 is an explanatory diagram of a driving device using rotary drive of a spherical body according to a conventional example.

### DESCRIPTION OF EMBODIMENTS

Next, with reference to the accompanying drawings, descriptions will be given on embodiments of the present invention for a better understanding of the present invention.

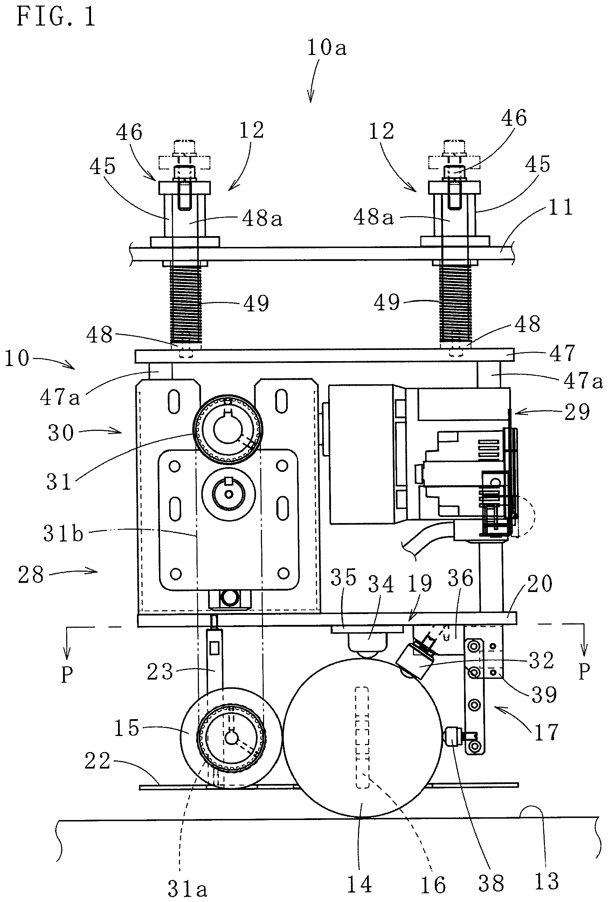

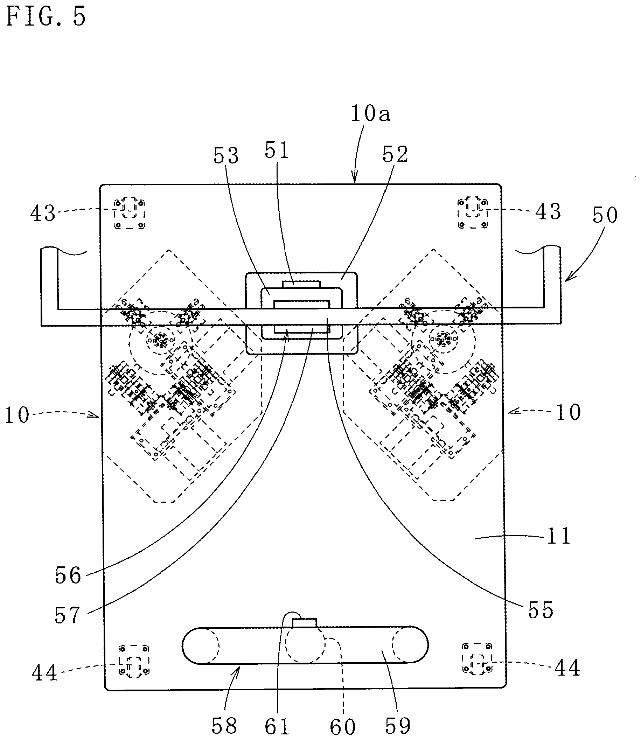

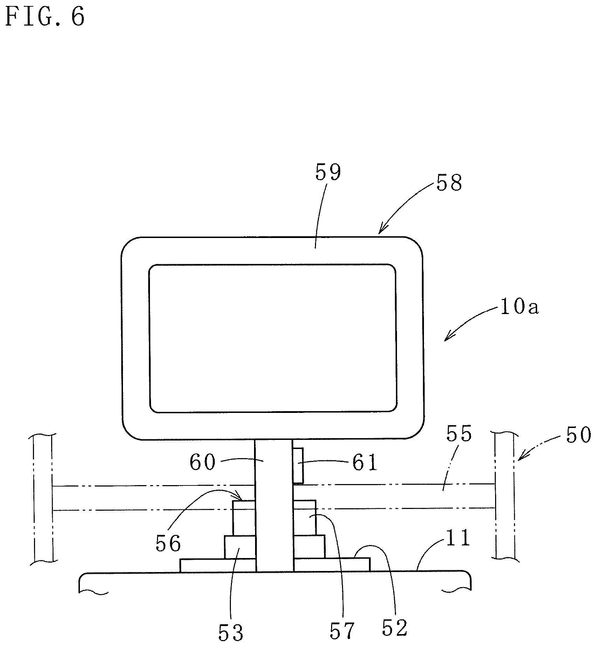

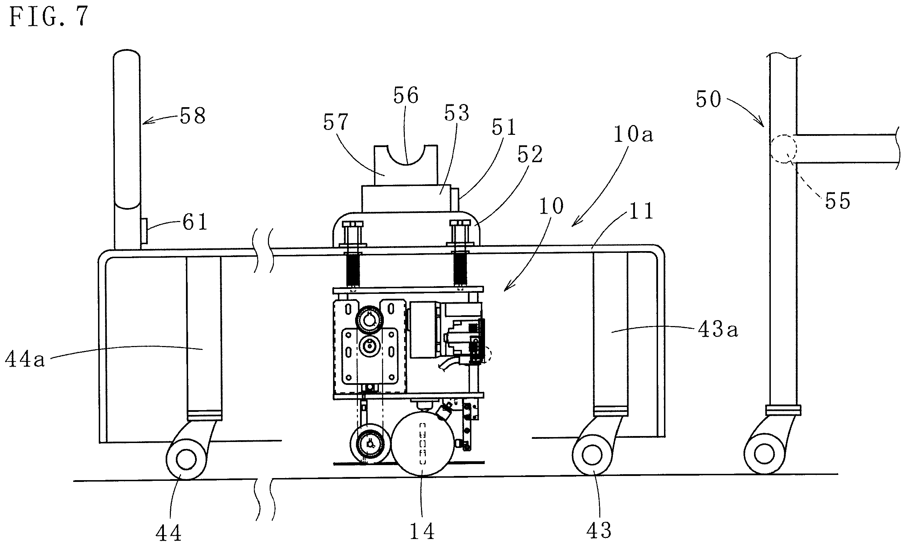

As illustrated in FIGs. 1, 2(A), and 4 to 7, each of spherical-body-driven modules 10 used in a self-propelled carriage 10a is to be attached to a bottom of a carriage frame 11 through at least two suspension mechanisms 12.

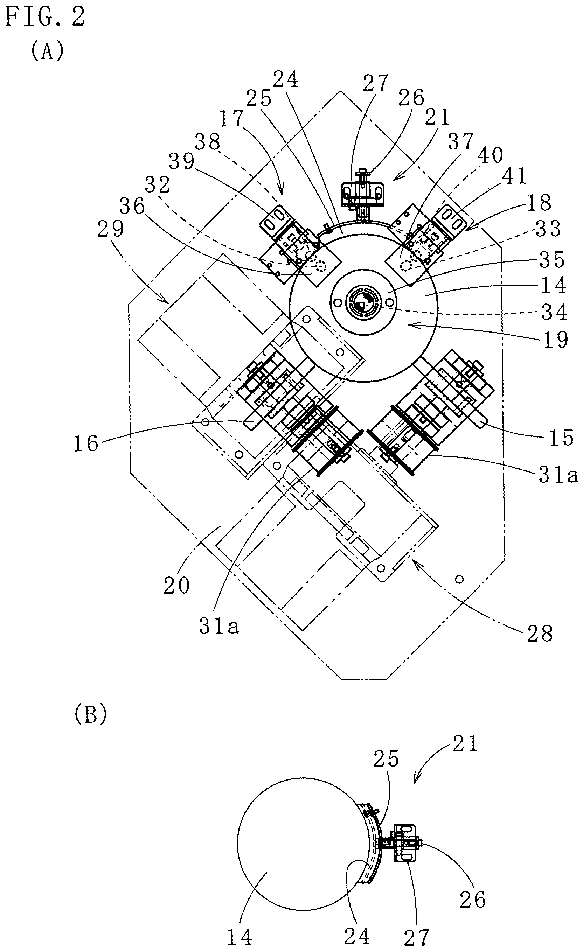

As illustrated in FIGs. 1 and 2(A), each of the spherical-body-driven modules 10 has a spherical body 14 in direct contact with a floor surface 13 from above, a first drive wheel 15 and a second drive wheel 16 in contact with a vertically middle position (an equator) of the spherical body 14 from two different, for example, orthogonal, directions (directions of an X-axis and a Y-axis) within a level surface, a first uncontrolled-ball bearing mechanism 17 and a second uncontrolled-ball bearing mechanism 18 positioned on a side opposite to the first drive wheel 15 and the second drive wheel 16 and respectively receiving reaction force from the first drive wheel 15 and the second drive wheel 16, a third uncontrolled-ball bearing mechanism 19 at a position above the spherical body 14 and holding the spherical body 14 by receiving a load applied on the spherical body 14, a base 20 at a position above the spherical body 14 and supporting the first and the second drive wheels 15 and 16 and the first to the third uncontrolled-ball bearing mechanisms 17 to 19 in a suspended state, and a cleaning mechanism 21 in contact with the spherical body 14 from a lateral direction and removing refuse adhered to the spherical body 14. Also, a cover 22 preventing dropping of the spherical body 14 is provided to the base 20 through supporting members 23. Detailed descriptions will hereunder be given.

The spherical body 14 has a multilayer structure (specifically, a double structure) having, for example, a spherical core material, and an outer shell covering the core material and in direct contact with the floor surface 13. Here, the core material becomes formed by, for example, hard plastic such as MC nylon or metal, and the outer shell becomes formed by, for example, rubber such as urethane, or polyacetal resin (an example of non-rigid plastic). A diameter of the spherical body 14 is, for example, in the range from 100 to 150 mm, and a thickness of the outer shell formed of rubber or non-rigid plastic is from 5 to 15 mm. Due to such the structure, deformation of the spherical body 14 can be controlled even when a load is applied on the spherical body 14, and at the same time, slippage hardly occurs between the spherical body 14 and the floor surface 13, and when turning force is given to the spherical body 14, the spherical body 14 becomes capable of moving on the floor surface 13. Here, spherical bodies can alternatively be composed of uniform plastic (hard plastic is desirable), non-rigid plastic such as urethane, or rubber, or metal.

As illustrated in FIG. 2(B), the cleaning mechanism 21 has a refuse removing member 24 in direct contact with part of a surface of the spherical body 14, a holding member 25 holding the refuse removing member 24 in a curved state having a same curvature as that of the spherical body 14, a first attaching member 26 to be connected to the holding member 25 through a spring (not illustrated) that is an example of elastic materials, and a second attaching member 27 holding the first attaching member 26 at a lower position of the base 20. Due to such the structure, when the spring is kept in a compressed state, the holding member 25 can be biased on the side of the spherical body 14 with respect to the second attaching member 27, which enables pressing the surface of the spherical body 14 by means of the refuse removing member 24, moving refuse adhered to the surface of the spherical body 14 to the side of the refuse removing member 24 and removing the refuse from the surface of the spherical body 14. The refuse removing member 24 can be formed by a cloth, non-woven cloth and the like.

The first drive wheel 15 and the second drive wheel 16 are in direct contact with the spherical body 14 respectively from an X-axis direction and a Y-axis direction that become orthogonal to each other toward a center of the spherical body 14 in planar view. The first drive wheel 15 and the second drive wheel 16 are connected respectively with a first rotary drive source 28 and a second rotary drive source 29, including a decelerating mechanism 30. Here, an outer periphery side of each of the first and the second drive wheels 15 and 16 in direct contact with the spherical body 14 is arc-like in projecting cross-section, and formed of hard rubber (e.g., urethane) or resin (e.g., polyacetal). Also, the first and the second rotary drive sources 28 and 29 each are, for example, an electric motor provided with a brake that brakes as soon as electricity becomes cut (the same applies to embodiments described below). The insides of the first and the second drive wheels 15 and 16 are composed of metal or hard plastic.

In FIGs. 1 and 2(A), the first and the second rotary drive sources 28 and 29 including the decelerating mechanism 30 are positioned above the base 20, and the first and the second drive wheels 15 and 16 are positioned below the base 20. A pulley 31 attached to an output shaft of the decelerating mechanism 30 and pulleys 31a each attached to an axle of one of the first and the second drive wheels 15 and 16 are connected through a belt 31b, and the first and the second drive wheels 15 and 16 are rotationally driven respectively by the first and the second rotary drive sources 28 and 29. A first and a second rotary drive sources and a first and a second drive wheels can be directly connected instead. When a first and a second rotary drive sources and a first and a second drive wheels are directly connected, the first and the second rotary drive sources and the first and the second drive wheels can be positioned on the lower side of the base 20.

The third uncontrolled-ball bearing mechanism 19 has a first uncontrolled-ball supporting body 32 and a second uncontrolled-ball supporting body 33 positioned above the equator of the spherical body 14 and respectively receiving reaction force from the first drive wheel 15 and the second drive wheel 16, and a third uncontrolled-ball supporting body 34 eccentrically provided above the spherical body 14, and pressing the spherical body 14 to the first and the second drive wheels 15 and 16 by receiving a load applied on the spherical body 14. In this embodiment, Ball Bear (a brand name) is used as the uncontrolled-ball supporting bodies.

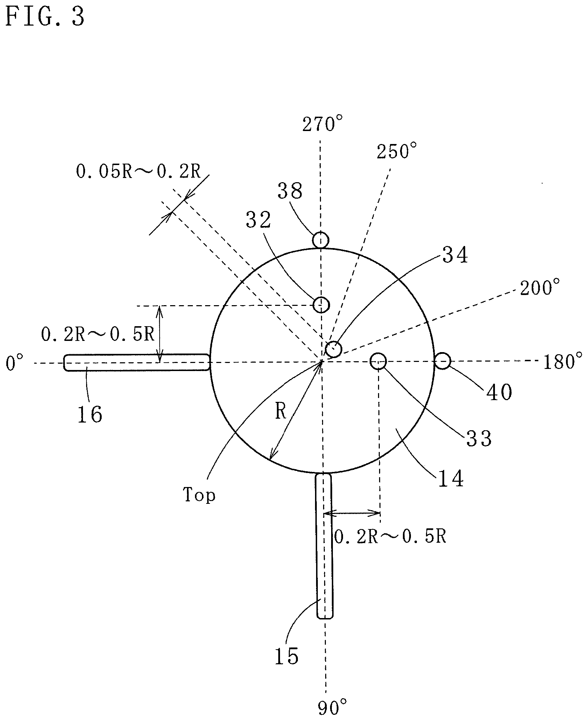

For example, as illustrated in FIG. 3, in planar view, when the second drive wheel 16 is arranged at a position of 0°, and the first drive wheel 15 is arranged at a position that is 90° anti-clockwise from the second drive wheel 16, the second uncontrolled-ball supporting body 33 becomes arranged at an angular position that is 180° anti-clockwise from the second drive wheel 16, and provided that a radius of the spherical body 14 is R, the second uncontrolled-ball supporting body 33 becomes arranged at a position ranging from 0.2 R to 0.5 R from the center of the spherical body 14. Also, the first uncontrolled-ball supporting body 32 becomes arranged at an angular position that is 270° anti-clockwise from the second drive wheel 16, and within a range from 0.2 R to 0.5 R from the center of the spherical body 14. The third uncontrolled-ball supporting body 34 becomes arranged at an angular position that is from 200° to 270° anti-clockwise from the second drive wheel 16, and within a range from 0.05 R to 0.2 R from the center of the spherical body 14. The third uncontrolled-ball supporting body 34 is attached to an undersurface of the base 20 through a third attaching base 35 so as to be in direct contact with the spherical body 14 from above and toward a vertical direction, and the first and the second uncontrolled-ball supporting bodies 32 and 33 are attached to the undersurface of the base 20 through a first and a second attaching bases 36 and 37 so as to be in direct contact with the spherical body 14 toward the center of the spherical body 14.

As illustrated in FIGs. 1 to 3, the first uncontrolled-ball bearing mechanism 17 has a fourth uncontrolled-ball supporting body 38 provided at a part on the equator of the spherical body 14 on a side opposite to the contact site of the first drive wheel 15 and the equator so as to be in direct contact with the spherical body 14 toward the center of the spherical body 14, and a position adjusting mechanism 39 attached to the undersurface of the base 20, holding the fourth uncontrolled-ball supporting body 38, and moving up and down with respect to the center of the spherical body 14. Also, the second uncontrolled-ball bearing mechanism 18 has a fifth uncontrolled-ball supporting body 40 provided at a part on the equator of the spherical body 14 on a side opposite to the contact site of the second drive wheel 16 and the equator so as to be in direct contact with the spherical body 14 toward the center of the spherical body 14, and a position adjusting mechanism 41 attached to the undersurface of the base 20, holding the fifth uncontrolled-ball supporting body 40, and moving up and down with respect to the center of the spherical body 14.

By the provision of the first and the second uncontrolled-ball bearing mechanisms 17 and 18, even when a load is applied on the spherical body 14, the contact between the spherical body 14 and the first drive wheel 15 and between the spherical body 14 and the second drive wheel 16 can be maintained. Also, by the provision of the third uncontrolled-ball bearing mechanism 19 (the first to the third uncontrolled-ball supporting bodies 32 to 34), when the third uncontrolled-ball bearing mechanism 19 receives a load applied on the spherical body 14, the spherical body 14 can be pressed to the first and the second drive wheels 15 and 16. Consequently, even when friction force between the spherical body 14 and the floor surface 13 becomes high due to a load applied on the spherical body 14, friction force between the spherical body 14 and the first drive wheel 15 and friction force between the spherical body 14 and the second drive wheel 16 can be made high as well. As a result, slippage of the first and the second drive wheels 15 and 16 with respect to the spherical body 14 can be prevented, and rotary drive force can be infallibly transmitted from the first and the second drive wheels 15 and 16 to the spherical body 14.

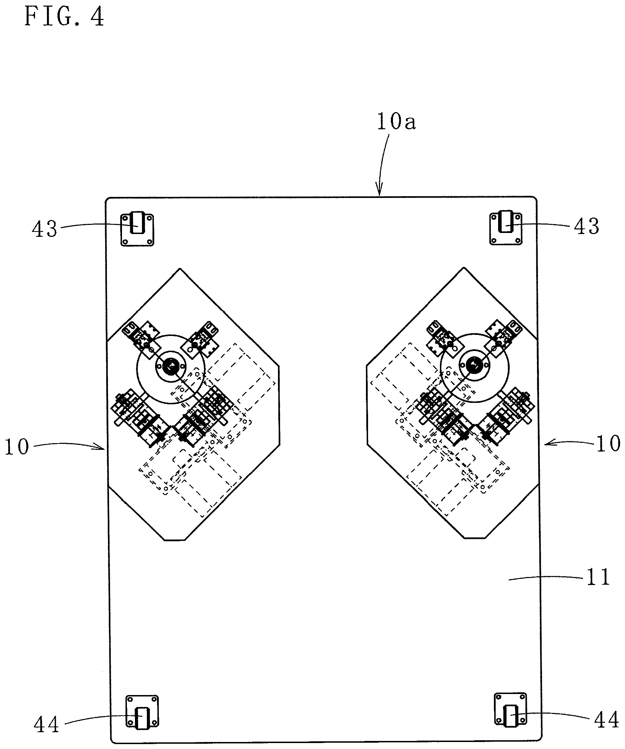

As illustrated in FIGs. 1, and 4 to 7, in the case of the self-propelled carriage 10a in which the spherical-body-driven modules 10 are provided to the carriage frame 11 through the suspension mechanisms 12, one of uncontrolled wheels 43 each in direct contact with the floor surface 13 through one of supporting members 43a is attached to each of lower portions of both sides in a width direction on one side of a longitudinal direction (in FIG. 4, vertical direction on paper) of the carriage frame 11, and one of uncontrolled wheels 44 each in direct contact with the floor surface 13 through one of supporting members 44a is attached to each of lower portions of both sides on the other side of the longitudinal direction of the carriage frame 11.

Each of the spherical-body-driven modules 10 is attached between one of the uncontrolled wheels 43 and one of the uncontrolled wheels 44 each attached to the carriage frame 11. It is also possible to attach either the uncontrolled wheels 43 or the uncontrolled wheels 44 to the carriage frame 11 through a lifting mechanism (e.g., a fluid pressure cylinder). Vertical position of either the uncontrolled wheels 43 or the uncontrolled wheels 44 can thereby be adjusted, enabling the spherical bodies 14 of the spherical-body-driven modules 10 to infallibly be in direct contact with the floor surface 13 together with the uncontrolled wheels 43 and 44. In this embodiment, the carriage frame 11 was, as illustrated in FIG. 4, rectangular (square, oblong), however, a carriage frame can be in a different shape as well.

As illustrated in FIG. 1, each of the suspension mechanisms 12 is provided standing, through one of first fastening means (e.g., bolts) 48, on a module frame (middle frame) 47 arranged on an upper side of the base 20 through a plurality of supporting members 47a, and an upper part of each of the suspension mechanisms 12 has one of core materials 48a each penetrating through the carriage frame 11 in a manner that enables the carriage frame 11 to move up and down, one of coil springs (an example of elastic members) 49 each attached to an outer side of one of the core materials 48a, one of guiding members 45 each having a flange and guiding one of the core materials 48a each projecting from the carriage frame 11, and one of second fastening means (e.g., bolts) 46 each fixing one of the guiding members 45 to the top of one of the core materials 48a.

The coil springs 49 become arranged in a compressed state, and when a heavy load is applied on the carriage frame 11, the core materials 48a and the guiding members 45 remain at each original position, however, the coil springs 49 compress, keeping the spherical bodies 14 from receiving a large load. When changing a load that the spherical bodies 14 receive, the coil springs 49 or the guiding members 45 are to be changed, and which to be changed is selected based on a material of the spherical bodies 14, and load capacity of the uncontrolled wheels 43 and 44. Generally, it is preferred that an adjustment be made so that all of the spherical bodies 14 receive, for example, a load ranging from 0.35 to 0.8 of a load which the carriage frame 11 receives.

Due to such the structure, even when the floor surface 13 is uneven, the spherical bodies 14 of the spherical-body-driven modules 10 can be made to be in direct contact with the floor surface 13 in accordance with the condition of unevenness.

A general structure of the self-propelled carriage 10a is shown in FIGs. 4 to 7. As described earlier, two spherical-body-driven modules 10 are provided on the bottom of the carriage frame 11, and the uncontrolled wheels 43 and 44 are provided on the circumference of the carriage frame 11 through the supporting members 43a and 44a.

This carriage frame 11 is for moving a bed (an example of conveyance carriages) 50 that is being used in a hospital and the like, and a lifting means 53 is provided to part of the carriage frame 11 through an attaching member 52 also working as a guide frame. A force sensor 51 is provided to a side (or an inside) of this lifting means 53.

On the top of the lifting means 53, a placement member 57 in which a valley portion 56 on which a horizontal member (a frame) 55 on an end in a longitudinal direction of the bed 50 becomes placed in a lying state is formed is provided. The placement member 57 can be replaced by one in a different shape depending on the type of a conveyance carriage. On the base side of the carriage frame 11, a grip (a handle) 58 is provided. This grip 58 has a frame body 59 consisting of a pipe material and in a rectangular shape and a supporting pole 60 provided on the bottom of the frame body 59, and a force sensor 61 is provided to the supporting pole 60.

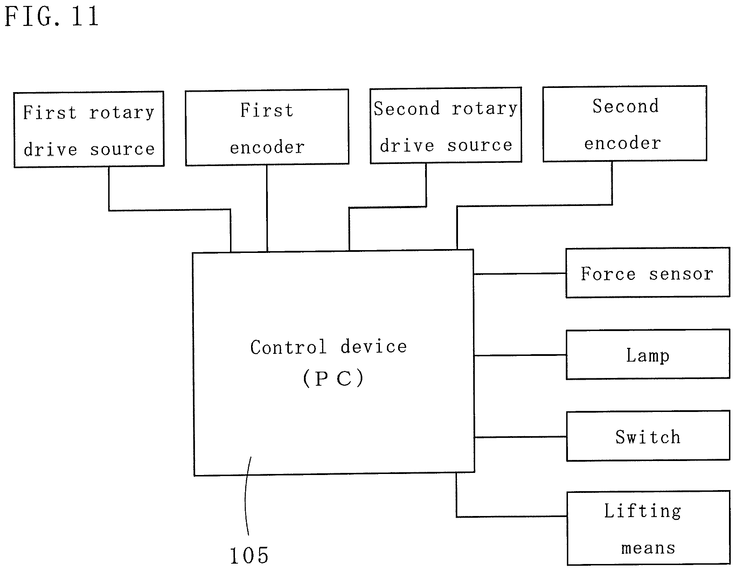

The force sensors 51 and 61 detect, for example, force component in two directions, an X-axis direction and a Y-axis direction, orthogonal to each other within a level surface and force component in a Z-axis direction orthogonal to the level surface, and at the same time, detect a quantity of moment around the Z-axis. By proving the force sensor 51 to the lifting means 53 and providing the force sensor 61 to the grip 58 or to a particular position on the carriage frame 11 where deformation occurs due to other loads, when an assisting operation for the movement of the self-propelled carriage 10a is performed with respect to the self-propelled carriage 10a, a direction of assisted movement (a direction of a load) can be detected by the force sensors 51 and 61. Therefore, by incorporating a control device 105 driving the spherical-body-driven modules 10 based on output of the force sensors 51 and 61 and illustrated in FIG. 11 into the carriage frame 11, the self-propelled carriage 10a can be moved to a direction of assisted movement.

It is also possible to provide an auxiliary carriage to a lower portion on one side of a bed, connect this auxiliary carriage to a self-propelled carriage having spherical-body-driven modules from a longitudinal direction, and integrate the bed and the self-propelled carriage. In this case, it is also possible to provide a force sensor detecting movement of the bed to a connected portion of the bed and the self-propelled carriage or to a carriage frame, detect a moving direction of the bed by this force sensor, and move the self-propelled carriage to a direction into which the bed is pushed. Here, it is preferred that a single or a plurality of force sensor(s) detecting the moving direction of the bed be provided to a grip provided to the self-propelled carriage, and/or to the auxiliary carriage.

Additionally, it is preferred that a confirmation sensor or a confirmation switch confirming the connection of the auxiliary carriage with the self-propelled carriage be provided.

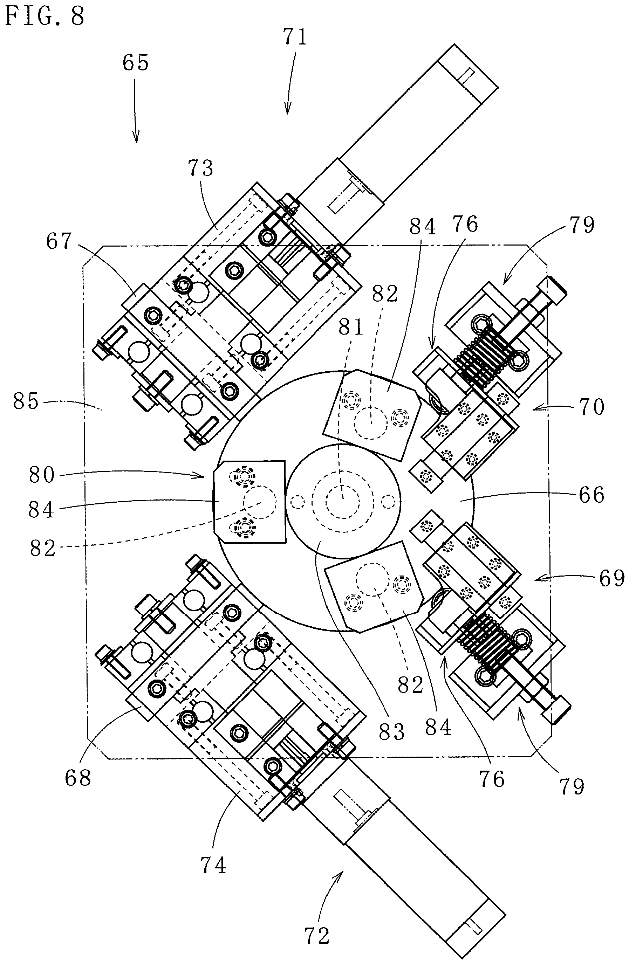

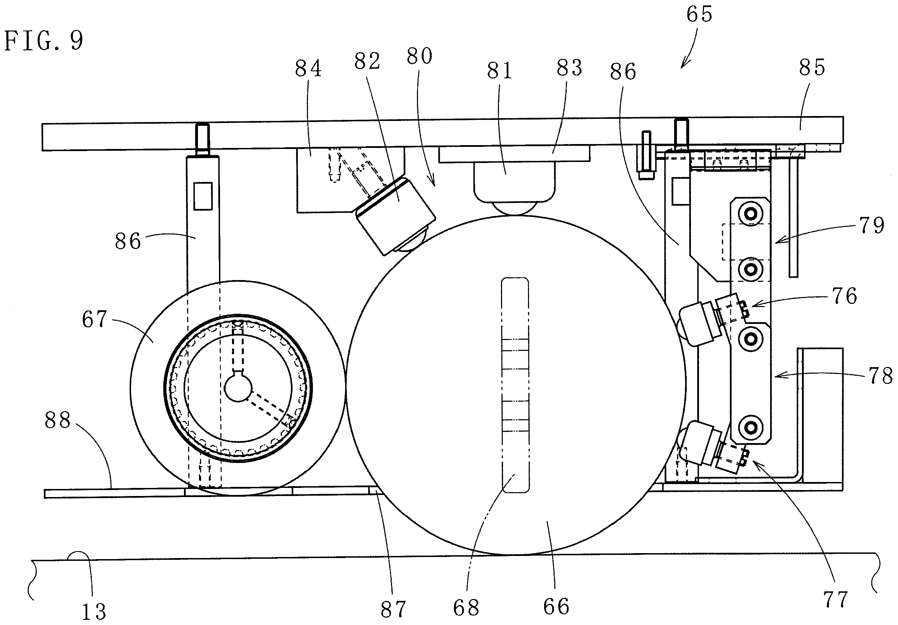

As illustrated in FIGs. 8 and 9, each of spherical-body-driven modules 65 for use in a self-propelled carriage has a spherical body 66 in direct contact with the floor surface 13 from above and rotating, a first drive wheel 67 and a second drive wheel 68 in contact with a vertically middle position of the spherical body 66 from two directions (directions of an X-axis and a Y-axis) orthogonal within a level surface, a first uncontrolled-ball bearing mechanism 69 on a side opposite to the first drive wheel 67 and receiving reaction force of the first drive wheel 67 and a second uncontrolled-ball bearing mechanism 70 on a side opposite to the second drive wheel 68 and receiving reaction force of the second drive wheel 68, and a third uncontrolled-ball bearing mechanism 80 at a position above the spherical body 66 and receiving a load applied on the spherical body 66. Here, the spherical body 66 can have a same structure as those of the spherical bodies 14.

The first drive wheel 67 and the second drive wheel 68 are in direct contact with the spherical body 66 respectively from the X-axis direction and the Y-axis direction becoming orthogonal to each other toward a center of the spherical body 66 in planar view. The first drive wheel 67 and the second drive wheel 68 are respectively connected to a first rotary drive source 71 including a first decelerating mechanism 73 and a second rotary drive source 72 including a second decelerating mechanism 74. Here, an outer periphery side of each of the first and the second drive wheels 67 and 68 in direct contact with the spherical body 14 is arc-like in projecting cross-section and formed of hard rubber (e.g., urethane) or resin (e.g., polyacetal). Also, the first and the second rotary drive sources 71 and 72 are, for example, electric motors.

The first uncontrolled-ball bearing mechanism 69 and the second uncontrolled-ball bearing mechanism 70 of each of the spherical-body-driven modules 65 respectively have a third uncontrolled-ball supporting body 76 and a fourth uncontrolled-ball supporting body 77, and respectively have a position adjusting mechanism 78 and a position adjusting mechanism 79. The third uncontrolled-ball supporting body 76 and the fourth uncontrolled-ball supporting body 77 are respectively provided above an equator of the spherical body 66 and below the equator of the spherical body 66, each being oriented toward the center of the spherical body 66. The third and the fourth uncontrolled-ball supporting bodies 76 and 77 of the first uncontrolled-ball bearing mechanism 69 receive pressing force of the first drive wheel 67, and the third and the fourth uncontrolled-ball supporting bodies 76 and 77 of the second uncontrolled-ball bearing mechanism 70 receive pressing force of the second drive wheel 68. The first uncontrolled-ball bearing mechanism 69 and the second uncontrolled-ball bearing mechanism 70 respectively have the position adjusting mechanism 78 and the position adjusting mechanism 79, the position adjusting mechanism 78 and the position adjusting mechanism 79 holding the third uncontrolled-ball supporting body 76 and the fourth uncontrolled-ball supporting body 77 each moving up and down with respect to the center of the spherical body 66. Also, the third uncontrolled-ball bearing mechanism 80 has a first uncontrolled-ball supporting body 81 arranged on the top of the spherical body 66, at least three second uncontrolled-ball supporting bodies 82 arranged at upper positions of the spherical body 66 and around the first uncontrolled-ball supporting body 81 (in FIG. 8, in planar view, each of the second uncontrolled-ball supporting bodies 82 is arranged at one of positions dividing a circumferential direction of a circle centering on the first uncontrolled-ball supporting body 81 into three equal parts), an attaching base 83 holding the first uncontrolled-ball supporting body 81, and attaching bases 84 holding the second uncontrolled-ball supporting bodies 82, each of the attaching bases 83 and 84 holding in a manner that makes a central axis of each of the first and the second uncontrolled-ball supporting bodies 81 and 82 pass through the center of the spherical body 66.

Due to the position adjusting mechanisms 78 and 79 of the first and the second uncontrolled-ball bearing mechanisms 69 and 70, the third uncontrolled-ball supporting body 76 and the fourth uncontrolled-ball supporting body 77 can infallibly be made to be in direct contact with an upper part of the equator of the spherical body 66 and a lower part of the equator of the spherical body 66, respectively, a directly contacted state between the spherical body 66 and the first drive wheel 67 and between the spherical body 66 and the second drive wheel 68 can be maintained, and at the same time, reaction force of the first and the second drive wheels 67 and 68 can be received evenly. Rotation control of the spherical body 66 can thereby be performed stably. Also, since the third uncontrolled-ball bearing mechanism 80 has the first uncontrolled-ball supporting body 81 arranged on the top of the spherical body 66 and the three second uncontrolled-ball supporting bodies 82 arranged at the upper positions of the spherical body 66 and around the first uncontrolled-ball supporting body 81, a load applied on the spherical body 66 can be received in a well-balanced state, and at the same time, the spherical body 66 can be held stably at a predetermined position.

Additionally, each of the spherical-body-driven modules 65 has a base 85 to which the first and the second drive wheels 67 and 68 and the first to the third uncontrolled-ball bearing mechanisms 69, 70, and 80 become attached, and a cover 88 attached to the base 85 through a plurality of supporting members 86, covering the first and the second drive wheels 67 and 68 and the first to the third uncontrolled-ball bearing mechanisms 69, 70, and 80, and concurrently exposing a lower portion of the spherical body 66 from an opening 87 formed in an undersurface of the cover 88.

Since the spherical-body-driven modules 65 can be used in the same way as the spherical-body-driven modules 10, descriptions on a self-propelled carriage for which the spherical-body-driven modules 65 are used will be omitted.

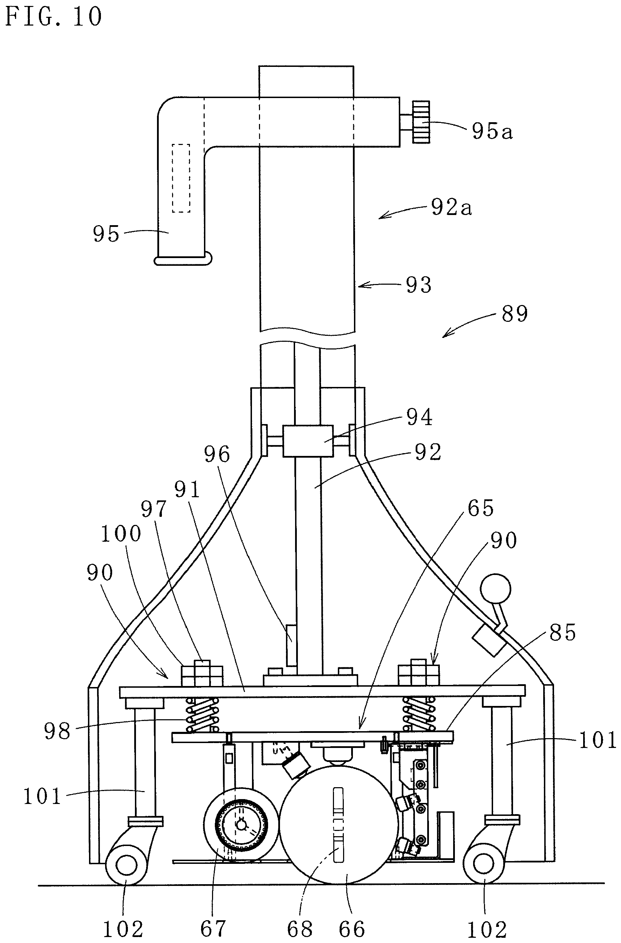

In FIG. 10, an assistive device for walking 89 that is an example of another self-propelled carriage is illustrated. Each of the spherical-body-driven modules 65 (can be the spherical-body-driven modules 10 instead) is provided to a carriage frame 91 through a plurality (three or four is preferable) of suspension mechanisms 90, and a support pole 92 is provided standing on the carriage frame 91. A plastic cover body 93 having a large-diameter cylindrical lower part, a nearly conical middle part, and a small-diameter cylindrical upper part is attached to the support pole 92 through a plurality of supporting members 94. On the upper part of the cover body 93, a grip 95 is provided in a manner that enables the grip 95 to adjust height, and a user can hold this grip 95. A sign 95a represents a screw (a height adjusting means) fixing a position of the grip 95. Here, a tower 92a is formed having the support pole 92 and the cover body 93.

A force sensor 96 is provided to the lower portion of the support pole 92. The force sensor 96 detects a direction in which a user pushes (a direction of a load), and the spherical-body-driven modules 65 move in the pushed direction. A force sensor can be provided to a grip instead. This force sensor 96 is also provided with a sensor detecting a load in a Z-axis direction (longitudinal direction), and when pressing force that is equal to or more than a certain amount is applied in the Z-axis direction, the force sensor 96 detects this, the spherical-body-driven modules 65, that is, behaviors of the spherical bodies 66, stop, and the rotary drive sources brake.

Each of the suspension mechanisms 90 has one of core materials 97 each provided standing on the base 85, one of coil springs (an example of elastic members) 98 each attached to one of the core materials 97, and one of double nuts 100 each working as a stopper for one of the core materials 97 each projecting from the carriage frame 91. Uncontrolled wheels 102 are provided around the carriage frame 91 through supporting members 101.

It is preferred that a load the spherical-body-driven modules 65 bear be from 30 to 80% with respect to a total load on the assistive device for walking 89.

In FIG. 11, a control device 105 of the self-propelled carriages is illustrated.

For the control device 105, a programmable controller (or a microcomputer) is used, and a first encoder provided to a rotation axis of a first rotary drive source, a second encoder provided to a rotation axis of a second rotary drive source, a force sensor (one that is store-bought), and a switch are connected to an input side, and the first and the second rotary drive sources, a lifting means, a lamp and the like are connected to an output side. Since the descriptions on the behaviors have been given earlier, they will be omitted.

The descriptions have been given hereinbefore on the present invention with reference to the embodiments. However, the present invention is not limited to the structures described in the above embodiments, and includes other embodiments and variations conceivable within the scope of matters described in the scope of claims.

### INDUSTRIAL APPLICABILITY

In the case of the self-propelled carriages according to the present invention for which the spherical-body-driven modules are used, since the spherical bodies are used, a traveling direction can be changed on the spot, and especially since the suspension mechanisms are provided in between each of the spherical-body-driven modules and the carriage frame, loads of the spherical-body-driven modules and the uncontrolled wheels provided around the carriage frame can be borne, being excellent in traveling stability. Therefore, the self-propelled carriage can be used for beds requiring frequent changes in direction, devices for moving beds, and assistive devices for walking.

### REFERENCE SIGNS LIST

10: spherical-body-driven module, 10a: self-propelled carriage, 11: carriage frame, 12: suspension mechanism, 13: floor surface, 14: spherical body, 15: first drive wheel, 16: second drive wheel, 17: first uncontrolled-ball bearing mechanism, 18: second uncontrolled-ball bearing mechanism, 19: third uncontrolled-ball bearing mechanism, 20: base, 21: cleaning mechanism, 22: cover, 23: supporting member, 24: refuse removing member, 25: holding member, 26: first attaching member, 27: second attaching member, 28: first rotary drive source, 29: second rotary drive source, 30: decelerating mechanism, 31, 31a: pulley, 31b: belt, 32: first uncontrolled-ball supporting body, 33: second uncontrolled-ball supporting body, 34: third uncontrolled-ball supporting body, 35: third attaching base, 36: first attaching base, 37: second attaching base, 38: fourth uncontrolled-ball supporting body, 39: position adjusting mechanism, 40: fifth uncontrolled-ball supporting body, 41: position adjusting mechanism, 43, 44: uncontrolled wheel, 43a, 44a: supporting member, 45: guiding member: 46: second fastening means, 47: module frame, 47a: supporting member, 48: first fastening means, 48a: core material, 49: coil spring, 50: bed, 51: force sensor, 52: attaching member, 53: lifting means, 55: horizontal member, 56: valley portion, 57: placement member, 58: grip, 59: frame body, 60: supporting pole, 61: force sensor, 65: spherical-body-driven module, 66: spherical body, 67: first drive wheel, 68: second drive wheel, 69: first uncontrolled-ball bearing mechanism, 70: second uncontrolled-ball bearing mechanism, 71: first rotary drive source, 72: second rotary drive source, 73: first decelerating mechanism, 74: second decelerating mechanism, 76: third uncontrolled-ball supporting body, 77: fourth uncontrolled-ball supporting body, 78, 79: position adjusting mechanism, 80: third uncontrolled-ball bearing mechanism, 81: first uncontrolled-ball supporting body, 82: second uncontrolled-ball supporting body, 83, 84: attaching base, 85: base, 86: supporting member, 87: opening, 88: cover, 89: assistive device for walking, 90: suspension mechanism, 91: carriage frame, 92: support pole, 92a: tower, 93: cover body, 94: supporting member, 95: grip, 95a: screw, 96: force sensor, 97: core material, 98: coil spring, 100: double nut, 101: supporting member, 102: uncontrolled wheel, 105: control device

## Claims

1. A self-propelled carriage (10a) having spherical-body-driven modules (10; 65) attached to a base of a carriage frame (11; 91), each of the spherical-body-driven modules (10; 65), comprising:
a spherical body (14; 66) in direct contact with a floor surface (13) from above;
a first drive wheel (15; 67) and a second drive wheel (16; 68) contacting a vertically middle position of the spherical body (14; 66) respectively from an X-axis direction and a Y-axis direction within a level surface, and rotationally driven respectively by a first rotary drive source (28; 71) and a second rotary drive source (29; 72);
a first uncontrolled-ball bearing mechanism (17; 69) and a second uncontrolled-ball bearing mechanism (18; 70) respectively on a side opposite to the first drive wheel (15; 67) and on a side opposite to the second drive wheel (16; 68) and respectively receiving reaction force from the first drive wheel (15; 67) and reaction force from the second drive wheel (16; 68);
a third uncontrolled-ball bearing mechanism (19; 80) at a position above the spherical body (14; 66) and holding the spherical body (14; 66) by receiving a load applied on the spherical body (14; 66); and
a base (20; 85) supporting the first and the second drive wheels (15, 16; 67, 68) and the first to the third uncontrolled-ball bearing mechanisms (17, 18, 19; 69, 70, 80),
**characterized in that**
the base (20; 85) is at a position above the spherical body (14; 66),
each of the spherical-body-driven modules (10; 65) is provided to the carriage frame (11; 91) through a plurality of suspension mechanisms (12; 90) for each of which an elastic material (49) is used, and uncontrolled wheels (43, 44; 102) in direct contact with the floor surface (13) are provided on a circumference of the carriage frame (11; 91), and
the third uncontrolled-ball bearing mechanism (19; 80) has a first uncontrolled-ball supporting body (81) positioned on a top of the spherical body (14; 66) and second uncontrolled-ball supporting bodies (82) arranged in plurality and surrounding the first uncontrolled-ball supporting body (81), and the first uncontrolled-ball bearing mechanism (17; 69) and the second uncontrolled-ball bearing mechanism (18; 70) respectively have a third uncontrolled-ball supporting body (76) and a fourth uncontrolled-ball supporting body (77), the third uncontrolled-ball supporting body (76) arranged above the fourth uncontrolled-ball supporting body (77) with the equator of the spherical body (14; 66) in between and respectively receiving pressing force of the first drive wheel (15; 67) and pressing force of the second drive wheel (16; 68).

2. The self-propelled carriage according to claim 1, wherein
a force sensor (51, 61; 96) detecting force component in an X-axis direction and a Y-axis direction orthogonal to each other within a level surface and a quantity of moment around a Z-axis orthogonal to the level surface is provided to part of the carriage frame (11; 91), and the spherical-body-driven modules (10; 65) move to a direction of a load applied on the carriage frame (11; 91).

3. The self-propelled carriage according to claim 1, wherein
a tower (92a) is formed projecting on the carriage frame (91), the tower (92a) is provided with a grip (95), a force sensor (96) detecting force component in an X-axis direction and a Y-axis direction orthogonal to each other within a planar surface, force component in a Z-axis direction orthogonal to these X-axis and Y-axis directions, and a quantity of moment around the Z-axis is provided to the tower (92a) or the grip (95), and the spherical-body-driven modules (10; 65) move along a direction of a load detected by the force sensor (96).

4. The self-propelled carriage according to claim 3, wherein
the force sensor (96) is further provided with a sensor detecting a load in the Z-axis direction, and by detecting a load that is equal to or more than a predetermined load in the Z-axis direction, the spherical body (14; 66) stops.

5. The self-propelled carriage according to any one of claims 1 to 4, wherein
the spherical body (14; 66) 1) has a multilayer structure having a spherical core material consisting of hard plastic or metal, and an outer shell formed around the core material and consisting of rubber or non-rigid plastic, or 2) consists of hard plastic, non-rigid plastic, rubber, or metal, each of which having a uniform structure.

6. The self-propelled carriage according to any one of claims 1 to 5, wherein
a cleaning mechanism (21) in contact with the spherical body (14; 66) from a lateral direction and removing refuse adhered to the spherical body (14; 66) is provided.

7. The self-propelled carriage according to any one of claims 1 to 6, wherein
a cover (22; 88) preventing dropping of the spherical body (14; 66) is provided to the base (20; 85) through supporting members (23; 86).

8. The self-propelled carriage according to claim 1 or 2, wherein
a lifting means (53) is provided to the carriage frame (11) through an attaching member (52), and a valley portion (56) on which a horizontal member (55) on an end in a longitudinal direction of a bed (50) is placed is formed in a placement member (57) provided on the lifting means (53).

9. An assistive device for walking (89), comprising the self-propelled carriage (91) according to any one of claims 1, 3 and 4.

## Patentansprüche

1. Selbstangetriebener Wagen (10a) mit Kugelkörper-getriebenen Modulen (10; 65), die an einer Basis eines Wagenrahmengestells (11; 91) angebracht sind, wobei jedes der Kugelkörper-getriebenen Module (10; 65) aufweist:
einen Kugelkörper (14; 66) in direktem Kontakt mit einer Bodenfläche (13) von oben;
ein erstes Antriebsrad (15; 67) und ein zweites Antriebsrad (16; 68), die eine vertikal mittlere Position des Kugelkörpers (14; 66) jeweils von einer X-Achsenrichtung und einer Y-Achsenrichtung innerhalb einer Ebenenfläche berühren, und jeweils durch eine erste Drehantriebsquelle (28; 71) und eine zweite Drehantriebsquelle (29; 72) drehend angetrieben werden;
einen ersten Lagermechanismus (17; 69) für eine unkontrollierte Kugel und einen zweiten Lagermechanismus (18; 70) für eine unkontrollierte Kugel auf einer Seite gegenüberlegend dem ersten Antriebsrad (15; 67) bzw. auf einer Seite gegenüberliegend dem zweiten Antriebsrad (16; 68), die eine Reaktionskraft von dem ersten Antriebsrad (15; 67) bzw. eine Reaktionskraft von dem zweiten Antriebsrad (16; 68) aufnehmen;
einen dritten Lagermechanismus (19; 80) für eine unkontrollierte Kugel an einer Position oberhalb des Kugelkörpers (14; 66), welcher den Kugelkörper (14; 66) durch Aufnahme einer auf den Kugelkörper (14; 66) aufgebrachten Last hält; und
eine Basis (20; 85), welche die ersten und die zweiten Antriebsräder (15, 16; 67, 68) und die ersten bis dritten Lagermechanismen (17, 18, 19; 69; 70; 80) für eine unkontrollierte Kugel stützt,
**dadurch gekennzeichnet, dass**
die Basis (20; 85) sich an einer Position oberhalb des Kugelkörpers (14; 66) befindet,
jedes der Kugelkörper-getriebenen Module (10; 65) an dem Wagenrahmengestell (11; 91) durch mehrere Hängemechanismen (12; 90) vorgesehen ist, für die jeweils ein elastisches Material (49) verwendet wird, und unkontrollierte Räder (43, 44; 102) in direktem Kontakt mit der Bodenfläche (13) an einem Umfang des Wagenrahmengestells (11; 91) vorgesehen sind, und
der dritte Lagermechanismus (19; 80) für eine unkontrollierte Kugel einen ersten Stützkörper (81) für eine unkontrollierte Kugel, der oben auf dem Kugelkörper (14; 66) positioniert ist, und zweite Stützkörper (82) für eine unkontrollierte Kugel, von denen mehrere vorgesehen sind und die den ersten Stützkörper (81) für eine unkontrollierte Kugel umgeben, aufweist, und der erste Lagermechanismus (17; 69) für eine unkontrollierte Kugel und der zweite Lagermechanismus (18; 70) für eine unkontrollierte Kugel jeweils einen dritten Stützkörper (76) für eine unkontrollierte Kugel und einen vierten Stützkörper (77) für eine unkontrollierte Kugel aufweisen, wobei der dritte Stützkörper (76) für eine unkontrollierte Kugel über dem vierten Stützkörper (77) für eine unkontrollierte Kugel angeordnet ist und der Äquator des Kugelkörpers (14; 66) zwischen diesen angeordnet ist und sie jeweils eine Druckkraft des ersten Antriebsrads (15; 67) bzw. eine Druckkraft des zweiten Antriebsrads (16; 68) aufnehmen.

2. Selbstangetriebener Wagen nach Anspruch 1, wobei ein Kraftsensor (51, 61; 96), der eine Kraftkomponente in einer X-Achsenrichtung und einer Y-Achsenrichtung, die in einer Ebenenfläche orthogonal zueinander sind, sowie einen Betrag eines Moments um eine Z-Achse orthogonal zu der Ebenenfläche detektiert, an einem Teil des Wagenrahmengestells (11; 91) vorgesehen ist, und die Kugelkörper-getriebenen Module (10; 65) sich in einer Richtung einer auf den Wagenrahmengestell (11; 91) aufgebrachten Last bewegen.

3. Selbstangetriebener Wagen nach Anspruch 1, wobei ein Turm (92a) vorstehend an dem Wagenrahmengestell (91) ausgebildet ist, wobei der Turm (92a) mit einem Griff (95) versehen ist, ein Kraftsensor (96), der eine Kraftkomponente in einer X-Achsenrichtung und einer Y-Achsenrichtung, die orthogonal zueinander innerhalb einer ebenen Fläche sind, eine Kraftkomponente in einer Z-Achsenrichtung orthogonal zu diesen X-Achsen- und Y-Achsenrichtungen, und einen Betrag eines Moments um die Z-Achse detektiert, an dem Turm (92a) oder Griff (95) vorgesehen ist, und die Kugelkörper-getriebenen Module (10; 65) sich entlang einer Richtung einer durch den Kraftsensor (96) detektierten Last bewegen.

4. Selbstangetriebener Wagen nach Anspruch 3, wobei der Kraftsensor (96) ferner mit einem Sensor versehen ist, der eine Last in der Z-Achsenrichtung detektiert, und der Kugelkörper (14; 66) bei Detektion einer Last, die gleich oder größer als eine vorgegebene Last in der Z-Achsenrichtung ist, stoppt.

5. Selbstangetriebener Wagen nach einem der Ansprüche 1 bis 4, wobei der Kugelkörper (14; 66) 1) eine Mehrlagenstruktur mit einem Kugel-Kernmaterial bestehend aus Hartkunststoff oder Metall, und einer Außenhülle aufweist, die um das Kernmaterial gebildet ist und aus Gummi oder einem nicht-steifen Kunststoff besteht, oder 2) aus Hartkunststoff, nicht-steifem Kunststoff, Gummi oder Metall besteht, die jeweils eine gleichförmige Struktur aufweisen.

6. Selbstangetriebener Wagen nach einem der Ansprüche 1 bis 5, wobei ein Reinigungsmechanismus (21), der sich von einer Seitenrichtung in Kontakt mit dem Kugelkörper (14; 66) befindet und Abfälle entfernt, die an dem Kugelkörper (14; 66) anhaften, vorgesehen ist.

7. Selbstangetriebener Wagen nach einem der Ansprüche 1 bis 6, wobei eine Abdeckung (22; 88), die ein Herabfallen des Kugelkörpers (14; 66) verhindert, durch Stützelemente (23; 86) an der Basis (20; 85) vorgesehen ist.

8. Selbstangetriebener Wagen nach Anspruch 1 oder 2, wobei ein Hebemittel (53) an dem Wagenrahmengestell (11) durch ein Befestigungselement (52) bereitgestellt ist, und ein Muldenabschnitt (56), auf dem ein horizontales Element (55) an einem Ende in einer Längsrichtung eines Betts (50) platziert ist, in einem Platzierungselement (57) gebildet ist, das an dem Hebemittel (53) vorgesehen ist.

9. Vorrichtung zur Unterstützung des Gehens (89), aufweisend den selbstangetriebenen Wagen (91) nach einem der Ansprüche 1, 3 und 4.

## Revendications

1. Chariot automoteur (10a) ayant des modules entraînés par corps sphérique (10 ; 65) fixés à une base d'un bâti de chariot (11 ; 91), chacun des modules entraînés par corps sphérique (10 ; 65) comprenant :
un corps sphérique (14 ; 66) en contact direct avec une surface de plancher (13) de dessus ;
une première roue motrice (15 ; 67) et une seconde roue motrice (16 ; 68) en contact avec une position verticalement centrale du corps sphérique (14 ; 66) respectivement à partir d'une direction d'axe X et d'une direction d'axe Y dans une surface de niveau, et entraînées en rotation respectivement par une première source d'entraînement de rotation (28 ; 71) et une seconde source d'entraînement de rotation (29 ; 72) ;
un premier mécanisme de roulement à billes incontrôlées (17 ; 69) et un deuxième mécanisme de roulement à billes incontrôlées (18 ; 70) respectivement sur un côté opposé à la première roue motrice (15 ; 67) et sur un côté opposé à la seconde roue motrice (16 ; 68) et recevant respectivement la force de réaction de la première roue motrice (15 ; 67) et la force de réaction de la seconde roue motrice (16 ; 68) ;
un troisième mécanisme de roulement à billes incontrôlées (19 ; 80) dans une position au-dessus du corps sphérique (14 ; 66) et maintenant le corps sphérique (14 ; 66) en recevant une charge appliquée sur le corps sphérique (14 ; 66) ; et
une base (20 ; 85) supportant la première et la seconde roue motrice (15, 16 ; 67, 68) et les premier, deuxième et troisième mécanismes de roulement à billes incontrôlées (17, 18, 19 ; 69, 70, 80),
**caractérisé en ce que** :
la base (20 ; 85) est dans une position au-dessus du corps sphérique (14 ; 66),
chacun des modules entraînés par corps sphérique (10 ; 65) est prévu sur le bâti de chariot (11 ; 91) par le biais d'une pluralité de mécanismes de suspension (12 ; 90) pour chacun desquels on utilise un matériau élastique (49), et des roues incontrôlées (43, 44 ; 102) en contact direct avec la surface de plancher (13) sont prévues sur une circonférence du bâti de chariot (11 ; 91), et
le troisième mécanisme de roulement à billes incontrôlées (19 ; 80) a un premier corps de support de billes incontrôlées (81) positionné sur une partie supérieure du corps sphérique (14 ; 66) et des deuxièmes corps de support de billes incontrôlées (82) agencés en plusieurs exemplaires et entourant le premier corps de support de billes incontrôlées (81), et le premier mécanisme de roulement à billes incontrôlées (17 ; 69) et le deuxième mécanisme de roulement à billes incontrôlées (18 ; 70) ont respectivement un troisième corps de support de billes incontrôlées (76) et un quatrième corps de support de billes incontrôlées (77), le troisième corps de support de billes incontrôlées (76) étant agencé au-dessus du quatrième corps de support de billes incontrôlées (77) avec l'équateur du corps sphérique (14 ; 66) entre eux et recevant respectivement la force de pression de la première roue motrice (15 ; 67) et la force de pression de la seconde roue motrice (16 ; 68).

2. Chariot automoteur selon la revendication 1, dans lequel :
un capteur de force (51, 61 ; 96) détectant le composant de force dans une direction d'axe X et une direction d'axe Y orthogonales entre elles dans une surface de niveau et une quantité de moment autour d'un axe Z orthogonal à la surface de niveau est prévue sur une partie du bâti de chariot (11 ; 91) et les modules entraînés par corps sphérique (10 ; 65) se déplacent dans une direction d'une charge appliquée sur le bâti de chariot (11 ; 91).

3. Chariot automoteur selon la revendication 1, dans lequel :
une tour (92a) est formée en saillie sur le bâti de chariot (91), la tour (92a) est prévue avec une poignée (95), un capteur de force (96) détectant la composante de force dans une direction d'axe X et une direction d'axe Y orthogonales entre elles dans une surface planaire, la composante de force dans une direction d'axe Z orthogonale à ces directions d'axe X et d'axe Y, et une quantité de moment autour de l'axe Z est fournie à la tour (92a) ou à la poignée (95), et les modules entraînés par corps sphérique (10 ; 65) se déplacent le long d'une direction d'une charge détectée par le capteur de force (96).

4. Chariot automoteur selon la revendication 3, dans lequel :
le capteur de force (96) est en outre prévu avec un capteur détectant une charge dans la direction d'axe Z et en détectant une charge qui est égale ou supérieure à une charge prédéterminée dans la direction d'axe Z, le corps sphérique (14 ; 66) s'arrête.

5. Chariot automoteur selon l'une quelconque des revendications 1 à 4, dans lequel :
le corps sphérique (14 ; 66) 1) a une structure multicouche ayant un matériau de noyau sphérique se composant de plastique dur ou de métal, et une coque externe formée autour du matériau de noyau et se composant de caoutchouc ou de plastique non rigide, ou bien 2) se compose de plastique dur, de plastique non rigide, de caoutchouc ou de métal, dont chacun a une structure uniforme.

6. Chariot automoteur selon l'une quelconque des revendications 1 à 5, dans lequel :
on prévoit un mécanisme de nettoyage (21) en contact avec le corps sphérique (14 ; 66) à partir d'une direction latérale et éliminant les déchets fixés au corps sphérique (14 ; 66).

7. Chariot automoteur selon l'une quelconque des revendications 1 à 6, dans lequel :
un couvercle (22 ; 88) empêchant la chute du corps sphérique (14 ; 66) est prévu sur la base (20 ; 85) par le biais d'éléments de support (23 ; 86).

8. Chariot automoteur selon la revendication 1 ou 2, dans lequel :
un moyen de levage (53) est prévu sur le bâti de chariot (11) par le biais d'un élément de fixation (52) et une partie de creux (56), sur laquelle un élément horizontal (55) sur une extrémité dans une direction longitudinale d'un lit (50) est placé, est formée dans un élément de mise en place (57) prévu sur le moyen de levage (53).

9. Dispositif d'assistance pour marcher (89), comprenant le chariot automoteur (91) selon l'une quelconque des revendications 1, 3 et 4.
